# EUROPEAN PATENT SPECIFICATION

(11) **EP 4 310 152 B1**
(45) Date of publication and mention of the grant of the patent: **04.12.2024**
(21) Application number: 22306087.2
(22) Date of filing: 21.07.2022
(51) Int. Cl.: C08L 95/00

(54) **USE OF A HYDROXIDE FOR ADJUSTING THE ELASTIC PROPERTIES OF A CROSSLINKED ELASTOMER-MODIFIED BITUMEN**
VERWENDUNG EINES HYDROXIDS ZUR EINSTELLUNG DER ELASTISCHEN EIGENSCHAFTEN EINES VERNETZTEN, ELASTOMERMODIFIZIERTEN BITUMENS
UTILISATION D'UN HYDROXYDE POUR AJUSTER LES PROPRIÉTÉS ÉLASTIQUE D'UN BITUME RÉTICULÉ MODIFIÉ PAR ÉLASTOMÈRE

(43) Date of publication of application: 24.01.2024
(73) Proprietor: TotalEnergies OneTech, 92400 Courbevoie (FR)
(72) Inventor: OEST, Stefan, 69360 SOLAIZE CEDEX (FR); ANDRESEN, Thomas, 69360 SOLAIZE CEDEX (FR)
(74) Representative: Cabinet Beau de Loménie

(56) References cited:
- US-A1- 2017 002 172
- US-B1- 6 451 886

## Description

### Field

The present invention relates to the technical field of bituminous compositions. More specifically, it relates to the use of a hydroxide for adjusting the elastic properties of an elastomer-modified bitumen.

### Backaround

The use of bitumen in the manufacture of materials for road and industrial applications has been known for a long time: bitumen is the main hydrocarbon binder used in the field of road construction and civil engineering.

Bituminous compositions are used as bituminous binders, in these different applications, providing they fulfill the required mechanical and elastic characteristics. The mechanical properties of the bituminous compositions are determined by standardized tests of the different mechanical characteristics, such as the softening point, the penetrability and the rheological characteristics in predetermined tension. For improving the elastic properties of the bituminous compositions, it is known in the art to introduce in the bitumen a crosslinkable elastomer, which is crosslinked *in situ* in the bituminous composition (see for instance US 2021/0047514 and prior art mentioned in this document). These kinds of modified bitumen are named bitumen modified by a crosslinked elastomer.

The applicant proposed in its previous patent application WO 2018/206489 to incorporate into a bituminous composition, both a hydroxide XOH, with X = Na, Ca, Mg, Li or K, and at least one amine additive selected from amines, diamines, polyamines, alkyl amido amines, amidopolyamines and imidazolines, for improving the stability over time and over external solicitations, with respect to the mechanical properties of said bituminous composition. In its other patent application WO 2021/116296, the applicant also describes the preparation of a master batch composition comprising the hydroxide in a hydrocarbonated component for its introduction in a bituminous composition. In the examples of patent application WO 2021/116296, bitumen without elastomer and bitumen modified by a crosslinked elastomer are prepared accordingly. In these examples, the most usual properties of a bituminous composition are studied (penetrability, measured at 25 °C according to EN 1426, ring and ball softening temperature, measured according to EN 1427, ageing after solicitations, storage stability). Data on elastic properties are only presented for one modified-bitumen: STYRELF 65/105-80 comprising 5 weight % of LG 501 Luprene which is a SBS Polymer comprising 30-32% by weight of styrene on the basis of the total weight of this polymer. The elastic recovery at 10°C, which is the only tested elastic property, is strictly identical with or without hydroxide.

Now, the applicant had shown that the addition of a hydroxide XOH like NaOH to a bitumen modified by a specific crosslinked elastomer, has a positive impact on the obtained elastic properties of the obtained bituminous composition.

### Summary of the invention

The invention is relative to the use of a hydroxide XOH with X = Na or K, in a bituminous composition comprising a bitumen modified by a crosslinked elastomer which is a crosslinked vinyl aromatic hydrocarbon and conjugated diene copolymer, having a vinyl aromatic hydrocarbon content representing less than 30% by weight of the weight of the crosslinked elastomer, for improving the effect of the crosslinked elastomer on the elastic properties of the bituminous composition. According to the invention, the improvement is either the improvement of the elastic properties of the bituminous composition, with the use of the same quantity of crosslinked elastomer or the maintaining of at least the same elastic properties of the bituminous composition, but with the use of a lower quantity of crosslinked elastomer in the bituminous composition. For the comparison, the quantity of crosslinked elastomer designates the % by weight of the crosslinked elastomer or of the crosslinkable elastomer leading to the crosslinked elastomer after crosslinking, with respect to the weight of the bitumen modified by a crosslinked elastomer (so without the hydroxide).

According to preferred embodiments, the introduced quantity of hydroxide XOH in the bituminous composition represents at most 3 % by weight, preferably from 0.01 to 2 % by weight, and more preferentially from 0.05 to 1 % by weight, and more preferentially from 0.1 to 0.7 % by weight, of the total weight of said bituminous composition. The said bituminous composition designates the final bituminous composition including the hydroxide XOH.

In particular, the hydroxide XOH is NaOH.

According to the invention, preferentially, the elastic properties of the bituminous composition for which the effect is improved are at least the elastic recovery at 25°C, measured according to DIN EN 13398 standard, preferably the elastic properties of the bituminous composition for which the effect is improved are at least the elastic recovery at 25°C, measured according to DIN EN 13398 standard and the deformation energy at 10°C measured according to DIN EN 13589 standard, and more preferentially the elastic properties of the bituminous composition for which the effect is improved are the elastic recovery at 25°C, measured according to DIN EN 13398 standard, the deformation energy at 10°C measured according to DIN EN 13589 standard and the phase angle and/or the temperature corresponding to a complex shear modulus of 15kPa measured with a Dynamic Shear Rheometer according to DIN EN 14770 standard. In particular, the deformation energy at 10°C measured according to DIN EN 13589 standard is integrated between 20 cm and 40 cm deformation.

In particular, the crosslinked elastomer is a crosslinked copolymer of vinyl aromatic hydrocarbon and conjugated diene, having a vinyl aromatic hydrocarbon content representing from 5% to 29% by weight, preferably from 10% to 28% by weight, more preferably from 20% to 28% by weight, of the weight of the crosslinked elastomer.

Advantageously, the crosslinked elastomer is a block copolymer or a random-block copolymer.

Preferentially, the crosslinked elastomer is styrene and butadiene copolymer.

In particular, the crosslinked elastomer is a crosslinked styrene and butadiene block or random-block copolymer.

Particularly suitable crosslinked elastomer are copolymers **SB**, which are formed either by a block based on monovinylaromatic hydrocarbon monomers, typically styrene, and a butadiene-based block, forming a copolymer of formula **S-B**, or by a monovinylaromatic hydrocarbon/butadiene, typically styrene and butadiene, random-block copolymer including at least a block based on monovinylaromatic hydrocarbon monomers, typically styrene, followed by at least a butadiene-based block, but also one or several part(s) corresponding to a random copolymer monovinylaromatic hydrocarbon/butadiene, typically styrene/butadiene, said copolymers **SB** being in their crosslinked form ; preferentially, in these copolymers **SB**, the vinyl group content of the butadiene units is in the range from 5% to 50% by weight, based on the total weight of condensed polybutadiene sequence(s), preferably from 10% to 30% by weight.

In the previously described crosslinked styrene and butadiene copolymers, the styrene content represents less than 30% by weight of the weight of the crosslinked elastomer, from 5% to 29% by weight, preferably from 10% to 28% by weight, more preferably from 20% to 28% by weight, of the weight of the crosslinked copolymer.

In particular, the crosslinking of the crosslinked elastomer is achieved within the bituminous composition, by thermal crosslinking or by crosslinking using a sulphured crosslinking agent. The crosslinking is obtained before the incorporation of the hydroxide XOH, within the bituminous composition.

Preferentially, the crosslinked elastomer represents from 0.5 to 20 % by weight, more preferentially from 1 to 15 % by weight, more preferentially from 2 to 10 % by weight, and more preferentially from 2 to 5 % by weight, of said bituminous composition. Here again, the said bituminous composition designates the final bituminous composition including the hydroxide XOH.

In some embodiments which can be combined to the previous ones, the bituminous composition (here again, the bituminous composition designates the final bituminous composition including the hydroxide XOH) may also include an olefinic polymer, which, in particular, represents from 0.05% to 2.5% by weight, preferentially from 0.15% to 2% by weight, more preferentially still from 0.4% to 1% by weight, more preferentially still from 0.4% to 0.8% by weight, said olefinic polymer being preferentially selected from the group consisting of (a) ethylene/glycidyl (meth)acrylate copolymers; (b) ethylene/monomer A/monomer C terpolymers and (c) the mixtures of these copolymers ; in particular, the olefinic polymer is chosen from the groups (a), (b) and (c) consisting of:
(a) the copolymers of ethylene and glycidyl (meth) acrylate chosen from, preferably random copolymers, of ethylene and of a monomer selected from glycidyl acrylate and glycidyl methacrylate, comprising from 50 % to 99.7 % by weight, preferably from 60 % to 95 % by weight, more preferably from 60 % to 90 % by weight of ethylene;
(b) the terpolymers, preferably random terpolymers, of ethylene, of a monomer A and of a monomer C chosen from random and block terpolymers; the monomer A being, preferentially, selected from vinyl acetate, (C₁-C₆)alkylacrylates and methacrylates and the monomer C being selected from glycidylacrylate and glycidylmethacrylate; in particular, the terpolymers ethylene/monomer A/monomer C comprise from 0.5 % to 40 % by weight, preferably from 5 to 35 % by weight, more preferably from 10 % to 30 % by weight of units resulting from monomer A and from 2.5 % to 15 % by weight of units resulting from monomer C, the rest being formed by units derived from the ethylene ;
(c) a mixture of two or more copolymers chosen from the categories (a) and (b).

In some embodiments which can be combined to the previous ones, the bituminous composition may also comprise an adhesive promoter selected from amines, diamines, polyamines, alkyl amido amines, amidopolyamines and imidazolines, which preferably represents at most 3 % by weight, preferably from 0.01 to 2 % by weight, and more preferentially from 0.05 to 1 % by weight, and more preferentially from 0.1 to 0.5 % by weight, of said bituminous composition. Here again, the said bituminous composition designates the final bituminous composition including the hydroxide XOH.

### Brief description of the Figures

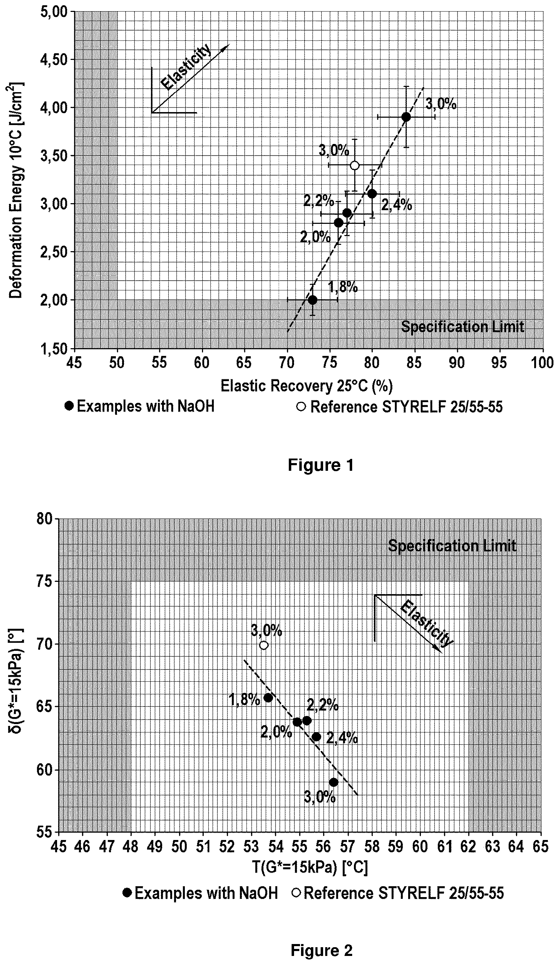

**Figure 1** represents the elastic recovery at 25°C and deformation energy at 10°C, of a reference bituminous composition (3% by weight of crosslinked elastomer, without hydroxide) and of bituminous compositions corresponding to the use of the invention, with the different crosslinked elastomer quantities studied in the examples.
**Figure 2** represents the rheological (phase angle δ and temperature T corresponding to a complex shear modulus (G*) of 15kPa measured with a Dynamic Shear Rheometer) of the reference bituminous composition and of bituminous compositions corresponding to the use of the invention, with the different crosslinked elastomer quantities studied in the examples.

### Detailed description

### Definitions

Throughout this specification, unless the context requires otherwise, the word "comprise", or variations such as "comprises" or "comprising", will be understood to imply the inclusion of a stated element or method step or group of elements or method steps, but not the exclusion of any other element or method step or group of elements or method steps. According to preferred embodiments, the word "comprise", or variations such as "comprises" or "comprising" means "consist exclusively of".

As used in the subject specification, the singular forms "a", "an" and "the" include plural aspects unless the context clearly dictates otherwise. Thus, for example, reference to "a hydroxide XOH" includes a single hydroxide XOH, as well as two hydroxides XOH; reference to "crosslinked elastomer" includes a single crosslinked elastomer, as well as two or more crosslinked elastomer; reference to "the invention" includes single or multiple aspects taught by the present disclosure; and so forth. Aspects taught herein are encompassed by the term "invention". All aspects of the invention are enabled within the width of the claims.

So, in particular, reference to a "hydroxide XOH", "crosslinked elastomer", "olefinic polymer" and "amine additive" includes single entities and combinations/mixtures of two or more of such entities. Nevertheless, according to preferred embodiments, these terms designate a single entity.

The terms "hydroxide" and "hydroxide XOH" are used interchangeably herein and designate a hydroxide XOH, with X = Na or K.

The expression "crosslinked elastomer/bitumen" or "bitumen modified by a crosslinked elastomer" denotes the result from the crosslinking treatment of a mixture comprising at least the bitumen and the crosslinkable elastomer. The elastomer itself is crosslinked and there may also exist crosslinkings between the elastomer and the bitumen.

Unless specified otherwise, the cited European standards are the standards in force on 1^{st} May 2022.

### Bitumen

A bitumen can be any bitumen, as known in the art. The bituminous composition can comprise one or more bitumen. The bitumen that can be used in the invention includes the bitumen of natural origin, those contained in natural deposits of bitumen, natural asphalt or tar sands and the bitumen obtained from the refining of crude oil. The bitumen used in the bituminous composition is advantageously chosen from the bitumen from the refining of crude oil, particularly from the bitumen containing asphaltenes. The bitumen may be obtained by conventional methods of bitumen manufacturing in a refinery, in particular by direct distillation and/or vacuum distillation of oil.

It is, in particular, standard to carry out the vacuum distillation of the atmospheric residues originating from the atmospheric distillation of crude oil. This manufacturing process consequently corresponds to the sequence of an atmospheric distillation and of a vacuum distillation, the feedstock feeding of the vacuum distillation corresponding to the atmospheric residue. The vacuum residues resulting from the vacuum distillation tower can be used as bitumen. In addition, these residues can optionally be subjected to other treatments in order to modify their mechanical properties, in particular their consistency. The bitumen may be optionally visbroken and/or deasphalted and/or air rectified. The visbreaking corresponds to a conversion process which employs thermal cracking reactions without supplying hydrogen.

The different bitumen obtained by the refining processes can be combined to achieve the best technical compromise in the bituminous composition.

The bitumen may also be a recycled bitumen or an oxidized bitumen.

The bitumen can be selected from bitumen fulfilling one of the following European standards EN 12591, EN 13924-1 (hard grade) or EN 13924-2 (multigrade).

In particular, the bituminous composition contains one or more bitumen chosen among paving grade bitumen as defined by EN 12591 (2009 version). The bitumen can be a bitumen of hard or soft grade. For road application, the bitumen is advantageously chosen from bitumen of grades 10/20 to 160/220, for instance of grades 20/30, 30/45, 35/50, 40/60, 50/70, 70/100, 100/150 and 160/220 and from hard grade bitumen as defined in EN 13924-1.

Advantageously, the bituminous composition corresponding to the use of the invention (meaning including the hydroxide) have a penetrability, measured at 25 °C according to EN 1426, between 1 and 300 1/10 mm, preferably between 10 and 100 1/10 mm, more preferably between 30 and 100 1/10 mm.

Advantageously, the bituminous composition corresponding to the use of the invention (meaning including the hydroxide) have a ring and ball softening temperature, measured according to EN 1427, preferably less than or equal to 90°C, and preferably between 30°C and 90°C.

### Crosslinked elastomer

In the invention, the bituminous composition includes a bitumen modified by a crosslinked elastomer. Such bitumen modified by a crosslinked elastomer may correspond to a "polymer modified bitumen" fulfilling the European standards EN 14023. The use of a crosslinked elastomer in bitumen was previously described, in order to improve the elasticity behaviour of the obtained bituminous composition (see for instance US 2021/0047514 and prior art mentioned in this document).

The crosslinking of the elastomer is carried out *in situ*, after the incorporation of a crosslinkable elastomer in a bitumen, said bitumen can include other additive(s). So, the bitumen modified by a crosslinked elastomer is obtained by the inclusion into the bitumen of a crosslinkable elastomer, in some embodiments with also the inclusion of a crosslinking agent, followed by a crosslinking step of the crosslinkable elastomer leading to the crosslinked elastomer and so to the bitumen modified by a crosslinked elastomer.

Suitable crosslinked elastomers used in the invention are crosslinked vinyl aromatic hydrocarbon (in particular monovinyl aromatic hydrocarbon) and conjugated diene copolymers, in particular crosslinked styrene and butadiene, copolymers, and preferentially block copolymers or random-block copolymers. A particularly suitable crosslinkable elastomer is a copolymer, named copolymer **SB**, which may be formed either by a block based on monovinyl aromatic hydrocarbon monomers (typically styrene) and a butadiene-based block, forming a copolymer of formula **S-B**, or by a monovinyl aromatic hydrocarbon/butadiene (typically styrene and butadiene) random-block copolymer including at least a block based on monovinyl aromatic hydrocarbon monomers (typically styrene) followed by at least a butadiene-based block, but also one or several part(s) corresponding to a random copolymer monovinyl aromatic hydrocarbon/butadiene (typically styrene/butadiene). In the specification hereafter, even when the copolymer **SB** is such a copolymer which is a random-block copolymer, all the monovinyl aromatic hydrocarbon units (typically styrene) are described under **S** part and all the butadiene units are described under **B** part.

"Block" has the common meaning in the art and designates, , a polymeric chain comprising several successive monomer units, for instance at least 5, or at least 10 successive monomer units, obtained by the polymerisation of one or more monomers of the same chemical nature.

By "random-block copolymer" is meant, within the meaning of the invention, a copolymer which includes both block and random parts. A random part is composed of two or more monomers of different chemical nature with a random sequence of these different monomers.

The monovinylaromatic hydrocarbon monomers of the copolymer **SB** may be independently any monovinylaromatic hydrocarbon known monomers, such as: styrene, o-methylstyrene, p-methylstyrene, p-tert-butylstyrene, 2,4-dimethylstyrene, alpha-methylstyrene, vinylnaphthalene, vinyltoluene and vinylxylene or mixtures thereof.

The **B** part (typically the block **B**) is based on substantially pure butadiene monomers or comprising minor proportions, up to 10% by weight, of structurally related conjugated dienes. Preferably, the **B** part (typically the **B** block) is exclusively made up of units derived from butadiene monomers.

The bituminous composition according to the use of the invention comprises at least one crosslinked elastomer resulting from the crosslinking of a copolymer **SB**. According to a particular embodiment, the bituminous composition according to the invention comprises several crosslinked elastomers, each resulting from the crosslinking of a copolymer **SB**. Thus, according to this embodiment, the preferred characteristics defined below characterize each of these copolymers **SB** included in the bituminous composition, before crosslinking.

Preferably, the monovinyl aromatic hydrocarbon monomer of the copolymer **SB** is styrene, which may be used as a substantially pure monomer or as the major component in mixtures with minor proportions of one or more other structurally related vinyl aromatic monomers, such as o-methylstyrene, p-methylstyrene, p-tert-butylstyrene, 2,4-dimethylstyrene, alpha-methylstyrene, vinylnaphthalene, vinyltoluene and vinylxylene. Advantageously, styrene is used alone or in a mixture with at most 10% by weight of one or more other vinyl aromatic monomers, based on the total weight of the monomers of the **S** part of the copolymer **SB**. The use of substantially pure styrene is particularly preferred.

Advantageously, the copolymer **SB** has a weight-average molecular weight Mw, measured by conventional detection gel permeation chromatography with polystyrene standard, ranging from 40,000 to 500,000 g/mol.

Preferably, the copolymer **SB** has a weight-average molecular weight Mw, measured by conventional detection gel permeation chromatography with polystyrene standard, of less than or equal to 400,000 g/mol, more preferably less than or equal to 250,000 g/mol, even more preferably less than or equal to 200,000 g/mol and advantageously less than or equal to 150,000 g/mol.

Preferably, the copolymer **SB** has a weight-average molecular weight (Mw), measured by conventional detection gel permeation chromatography with polystyrene standard, greater than or equal to 50,000 g/mol, more preferably greater than or equal to 65,000 g/mol, still more preferably greater than or equal to 75,000 g/mol.

Preferably, the copolymer **SB** has a weight-average molecular weight (Mw), measured by triple detection gel permeation chromatography, ranging from 40,000 to 200,000 g/mol, more preferably from 50,000 to 100,000 g/mol, , advantageously from 65,000 to 95,000 g/mol.

When the butadiene (1,3-butadiene) of the copolymer **SB** is polymerised via a 1,2-addition mechanism, the result is a vinyl group pendant from the polymer backbone. The vinyl content of the copolymer **SB**, determined by coupling 13C NMR (carbon nuclear magnetic resonance) and 1H NMR (proton nuclear magnetic resonance) spectroscopy techniques, allows the characterisation of the different elastomers. The vinyl group contents described below refer to the final contents in the copolymer **SB** and not to the monomers used for their synthesis. Thus, the vinyl group contents defined below do not take into account the vinyl groups that may be present in the precursor monomers but that were reacted during the polymerisation reaction. In particular, they do not take into account the vinyl groups present in the monovinyl aromatic monomers which have reacted to form the **S** part of the copolymer **SB**. The vinyl content only characterises the vinyl groups present in the **B** part (typically the block **B**) of the copolymer **SB** due to the polymerisation of 1,3-butadiene by a 1,2-addition mechanism.

Preferably, the copolymer **SB** has a vinyl group content of greater than or equal to 9 mol% (% by mole), based on the total number of moles of the copolymer **SB**, preferably greater than or equal to 10 mol%.

Preferably, the copolymer **SB** has a vinyl group content of less than or equal to 35 mol%, based on the total number of moles of copolymer **SB**, more preferably less than or equal to 30 mol%.

Preferably, the **B** part (typically the block **B**) of the copolymer **SB** has a vinyl group content ranging from 5% to 50% by weight, based on the total weight of condensed polybutadiene sequences present in the **B** part (typically the block **B**), preferably from 10% to 30% by weight.

The units obtained by the polymerisation of 1,3-butadiene according to a 1,2-addition mechanism or according to a 1,4-addition mechanism have the same molar weight. Thus, the contents of vinyl groups present in the **B** part (typically the block **B**) expressed in weight or in moles are equivalent.

Preferably, the **B** part (typically the block **B**) of the copolymer **SB** has a vinyl group content ranging from 5 to 50 mol%, based on the total amount of condensed polybutadiene sequences present in the **B** part (typically the block **B**), preferably from 10 to 30 mol%.

Advantageously, the **B** part (typically the block **B**) of the copolymer **SB** has a glass transition temperature Tg, determined by differential scanning calorimetry (DSC), of less than or equal to -70°C, preferably less than or equal to -75°C.

More advantageously, the **B** part (typically the block **B**) of the copolymer **SB** has a glass transition temperature Tg, determined by differential scanning calorimetry (DSC), ranging from -100°C to -70°C, preferably from -90 to -75°C.

According to the invention, the content of monovinyl aromatic hydrocarbon (advantageously styrene) in the copolymer **SB** is less than 30% by weight, based on the total weight of the copolymer **SB**. Preferably, the content of monovinyl aromatic hydrocarbon (advantageously styrene) in the copolymer **SB**, is from 5% to 29% by weight, preferably from 10% to 28% by weight, more preferably from 20% to 28% by weight, based on the total weight of the copolymer **SB**. In the invention, the weight content of monovinyl aromatic hydrocarbon (typically styrene) can be determined by as determined by ¹³C NMR spectroscopy.

Advantageously, the copolymer **SB** is essentially in a non-hydrogenated form.

The Solprene^{®} 1205 marketed by Dynasol is an example of such kind of crosslinkable elastomers. The Solprene^{®} 1205 may be crosslinked by several routes, in particular by thermal crosslinking or crosslinking with a crosslinking agent, typically a sulphured crosslinking agent.

In general, from 0.5 to 20% by weight of a crosslinkable elastomer, and in particular of a copolymer **SB**, more preferably from 1% to 15% by weight, even more preferably from 2% to 10% by weight, even more preferably from 3% to 6% by weight, is used for forming the bituminous composition. These % by weight are given with respect to the total weight of the bituminous composition, before the crosslinking (so, also, before the addition of the hydroxide).

Preferably, the bituminous composition corresponding to the use of the invention comprises from 0.5 to 20% by weight of a crosslinked elastomer, and in particular of a crosslinked elastomer obtained from the crosslinking of a copolymer **SB**, more preferably from 1% to 15% by weight, even more preferably from 2% to 10% by weight, even more preferably from 3% to 6% by weight. These % by weight are given with respect to the total weight of the bituminous composition (so including also the hydroxide). The quantity of crosslinked elastomer is substantially identical to the quantity of the crosslinkable elastomer, when no crosslinking agent is used or when the crosslinking agent is used in very low quantity, in particular with a content representing at most 0.1 % of the final bituminous composition (case of sulphur). The crosslinking of the crosslinkable elastomer, and in particular of the monovinyl aromatic hydrocarbon and conjugated diene copolymer, in particular styrene and butadiene copolymer as defined in the specification, may be achieved, in the crosslinked elastomer modified bitumen composition, by different means, known in the art, for instance by using a crosslinking agent or a thermal crosslinking.

In particular, the crosslinking may be achieved thanks to the use of a sulphured crosslinking agent.

Preferably, the crosslinking agent is chosen from sulphur and the hydrocarbyl polysulphides, alone or in a mixture, optionally in the presence of sulphur-donor or non-sulphur-donor vulcanization accelerators, alone or in a mixture. The sulphur is in particular flowers of sulphur or also alpha crystallized sulphur. The hydrocarbyl polysulphides are for example chosen from the dihexyl disulphides, dioctyl disulphides, didodecyl disulphides, ditertiododecyl disulphides, dihexadecyl disulphides, dihexyl trisulphides, dioctyl trisulphides, dinonyl trisulphides, ditertiododecyl trisulphides, dihexadecyl trisulphides, diphenyl trisulphides, dibenzyl trisulphides, dihexyl tetrasulphides, dioctyl tetrasulphides, dinonyl tetrasulphides, ditertiododecyl tetrasulphides, dihexadecyl tetrasulphides, diphenyl tetrasulphides, orthotolyl tetrasulphides, dibenzyl tetrasulphides, dihexyl pentasuiphides, dioctyl pentasulphides, dinonyl pentasulphides, ditertiododecyl pentasulphides, dihexadecyl pentasuiphides, dibenzyl pentasulphides or diallyl pentasulphides.

The sulphur-donor vulcanization accelerators can be chosen from the thiuram polysulphides, such as for example, the tetrabutylthiuram disulphides, tetraethylthiuram disulphides and tetramethylthiuram disulphides, dipentamethylenethiuram disulphides, dipentamethylenethiuram tetrasulphides or dipentamethylenethiuram hexasulphides.

The non-sulphur-donor vulcanization accelerators which can be used according to the invention can be chosen in particular from mercaptobenzothiazole and its derivatives, dithiocarbamates and derivatives, and thiuram monosulphides and derivatives, alone or in a mixture. There may be mentioned as examples of non-sulphur-donor vulcanization accelerators, zinc 2-mercaptobenzothiazole, zinc benzothiazole thiolate, sodium benzothiazole thiolate, benzothiazyl disulphide, copper benzothiazole thiolate, benzothiazyl N,N'-diethyl thiocarbamyl sulphide and benzothiazole suiphenamides such as 2-benzothiazole diethyl sulphenamide, 2-benzothiazole pentamethylene sulphenamide, 2-benzothiazole cyclohexyl sulphenamide, N-oxydiethylene 2-benzothiazole sulphenamide, N-oxydiethylene 2-benzothiazole thiosulphenamide, 2-benzothiazole dicyclohexyl sulphenamide, 2-benzothiazole diisopropyl sulphenamide, 2-benzothiazole tertiobutyl sulphenamide, bismuth dimethyl dithiocarbamate, cadmium diamyl dithiocarbamate, cadmium diethyl dithiocarbamate, copper dimethyl dithiocarbamate, lead diamyl dithiocarbamate, lead dimethyl dithiocarbamate, lead pentamethylene dithiocarbamate, selenium dimethyl dithiocarbamate, tellurium diethyl dithiocarbamate, zinc diamyl dithiocarbamate, zinc dibenzyl dithiocarbamate, zinc diethyl dithiocarbamate, zinc dimethyl dithiocarbamate, zinc dibutyl dithiocarbamate, zinc pentamethylene dithiocarbamate, dipentamethylene thiuram monosulphide, tetrabutyl thiuram monosulphide, tetraethyl thiuram monosulphide and tetramethyl thiuram monosulphide.

The crosslinking agent can also be chosen from the compounds of general formula HS-R-SH where R represents a saturated or unsaturated, linear or branched hydrocarbon group with 2 to 40 carbon atoms, optionally comprising one or more heteroatoms, such as oxygen. Among the compounds corresponding to this general formula, there can be mentioned for example 1,2 ethanedithiol, 1,3 propanedithiol, 1,4 butanedithiol, 1,5 pentanedithiol, 1,6 hexanedithiol, 1,7 heptanedithiol, 1,8 octanedithiol, bis-(2-mercaptoethyl)ether, bis-(3-mercaptoethyl)ether, bis-(4-mercaptoethyl)ether, (2-mercaptoethyl) (3-mercaptobutyl)ether, (2-mercaptoethyl) (4-mercaptobutyl)ether, 1,8-dimercapto-3,6-dioxaoctane, benzene-1,2-dithiol, benzene-1,3-dithiol, benzene-1,4-dithiol or toluene-3,4-dithiol, biphenyl-4,4'-dithiol.

In general, a quantity of crosslinking agent (in particular of sulphured crosslinking agent, such as sulphur) between 0.05% and 5% by weight, preferably between 0.1% and 2%, more preferentially between 0.2% and 1%, even more preferentially between 0.3% and 0.5% is used for forming the bituminous composition. These % by weight are given with respect to the total weight of the bituminous composition, before the crosslinking (so before the addition of the hydroxide). Preferably, the quantities of crosslinkable elastomer and cross-linking agent are fixed so as to obtain a crosslinkable elastomer/crosslinking agent (typically copolymer **SB**/crosslinking agent) ratio comprised between 50:1 and 150:1, preferably between 60:1 and 100:1, more preferentially between 70:1 and 80:1.

The crosslinking may also be achieved thermally, thanks to the use of an monovinyl aromatic hydrocarbon and conjugated diene (typically butadiene), in particular styrene and butadiene, copolymer (typically a copolymer **SB**, as previously described), having a particular quantity of 1,2 double bond units originating from the conjugated diene (typically butadiene), this quantity of 1,2 double bond units originating from the conjugated diene (typically butadiene), being comprised between 5% and 50% by weight, with respect to the total weight of the conjugated diene, in particular butadiene, units preferably between 10% and 40%, more preferentially between 15% and 30%, even more preferentially between 18% and 25%, even more preferentially between 18% and 23% or between 20% and 25%, or also thanks to the use of said monovinyl aromatic hydrocarbon and conjugated diene (typically butadiene), in particular styrene and butadiene, copolymer (typically a copolymer **SB**, as previously described), having or not the particular quantity defined above of 1,2 double bond units originating from the conjugated diene (typically butadiene), in combination with a cross-linking agent. In that case, the cross-linking agent may be a sulphured crosslinking agent, as previously described. But, according to specific embodiments, the crosslinking may be essentially thermal. The term "essentially thermal" is understood to mean, within the meaning of the invention, a crosslinking created by heat treatment, in the absence of a chemical crosslinking agent. A crosslinked elastomer/bitumen obtained by such a method thus differs from crosslinked elastomer/bitumen obtained by crosslinking in the presence of crosslinking agents, notably crosslinking agents chosen from sulphur-containing crosslinking agents.

The thermal crosslinking can be obtained by a suitable thermal treatment of the bitumen comprising the crosslinkable elastomer and eventually (an)other additive(s). The crosslinking of the crosslinked elastomer/bitumen can be demonstrated by carrying out on this crosslinked elastomer/bitumen, tensile tests according to the standard NF EN 13587. The crosslinked elastomer/bitumen has a higher tensile strength than the elastomer/bitumen. A higher tensile strength results in a high ultimate elongation or maximum elongation (ε max in %), a high rupture stress or maximum elongation stress (σ ε max in MPa), high conventional energy at 400% (E 400% in J/cm²) and/or high total energy (total E in J). The crosslinked elastomer/bitumen has a maximum elongation, according to the standard NF EN 13587, greater than or equal to 400%, preferably greater than or equal to 500%, more preferentially greater than or equal to 600%, even more preferentially greater than or equal to 700%.

### Use of a Hydroxide

The invention uses a hydroxide XOH, with X = Na or K, for adjusting the elastic properties of bituminous compositions including a crosslinked elastomer. It is possible to use one, or more than one hydroxide XOH.

The purpose of the use of the invention is to optimize the elastic properties of bituminous compositions modified by a crosslinked elastomer, in particular as previously described.

According to a particular embodiment, the use of the invention concerns a bituminous composition in which at most 3 % by weight, preferably from 0.01 to 2 % by weight, and more preferentially from 0.05 to 1% by weight, and more preferably from 0.1 to 0.7 % by weight of the hydroxide XOH with X = Na or K, relative to the total weight of the obtained bituminous composition, has been incorporated.

The invention uses NaOH and/or KOH, as hydroxide XOH, and advantageously only NaOH, only KOH or a mixture of NaOH and KOH, as hydroxide XOH. According to a particular embodiment, NaOH is used, as hydroxide XOH, and advantageously only NaOH is used, as hydroxide XOH, in a bituminous composition comprising a bitumen modified by a crosslinked elastomer, for improving the effect of the crosslinked elastomer on the elastic properties of the bituminous composition.

According to the invention, the use of the hydroxide improves the elastic properties of the obtained bituminous composition, when the elastic properties are compared with the same bituminous composition, but without the incorporation of the hydroxide (so, with the use of the same quantity of crosslinked elastomer). According to the invention, it is also possible to maintain at least the same elastic properties of the bituminous composition, but with the use of a lower quantity of crosslinked elastomer within the bituminous composition, which is very advantageous economically. With the use of the invention, it is possible to improve and/or positively influence the elastic behaviour of the obtained bituminous composition. So, the invention is also relative to the use of a hydroxide XOH with X = Na or K, in a bituminous composition comprising a bitumen modified by a crosslinked elastomer which is a crosslinked vinyl aromatic hydrocarbon and conjugated diene copolymer, having a crosslinked vinyl aromatic hydrocarbon content representing less than 30% by weight of the total weight of the crosslinked elastomer, for improving the elastic properties of the bituminous composition, with the use of the same quantity of crosslinked elastomer or for maintaining of at least the same elastic properties of the bituminous composition, but with the use of a lower quantity of crosslinked elastomer in the bituminous composition. All the embodiments described in the specification apply to these uses.

In particular, this elastic behaviour corresponds at least to the elastic recovery at 25°C, measured according to DIN EN 13398 standard, preferably to at least the elastic recovery at 25°C, measured according to DIN EN 13398 standard and the deformation energy at 10°C measured according to DIN EN 13589 standard, and more preferentially to the elastic recovery at 25°C, measured according to DIN EN 13398 standard, the deformation energy at 10°C measured according to DIN EN 13589 standard and the phase angle and/or the temperature corresponding to a complex shear modulus of 15kPa measured with a Dynamic Shear Rheometer according to DIN EN 14770 standard. In particular, the deformation energy at 10°C measured according to DIN EN 13589 standard is integrated between 20cm and 40 cm deformation and is designated as the deformation energy at 10°C (20-40 cm) measured according to DIN EN 13589 standard.

### Other additives

The present invention can be implemented for any types of bituminous compositions, especially bituminous compositions for industrial and road applications. In particular, the bituminous composition in which the hydroxide is used is not a bitumen in water emulsion.

According to a particular embodiment of the invention, one or several additives or adjuvants, other than the hydroxide, are also included and/or present in said bituminous compositions.

Advantageously, and in particular for road applications, the said bituminous composition may contain an amine additive as described in WO 2018/206489 which is incorporated by reference. Such an amine additive acts as an adhesive promoter in the bituminous composition. Advantageously, it represents at most 3 % by weight, preferably from 0.01 to 2 % by weight, and more preferentially from 0.05 to 1 % by weight, and more preferably from 0.1 to 0.5 % by weight, of the bituminous composition and so it is introduced in the bituminous composition as described in the invention in such quantities.

In particular, the amine additive is selected from:
- Amines of formula (I): 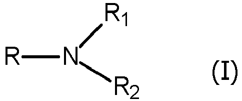
wherein:
- R is a saturated or unsaturated, substituted or unsubstituted, optionally branched or cyclic, hydrocarbon radical with 8 to 24 carbon atoms, for example derived from tallow fatty acids, or tall oil fatty acids ; and
- R₁ and R₂ can be the same or different and are selected from hydrogen or hydrocarbon radical with 1 to 24 carbon atoms ; R₁ and R₂ are preferably selected from hydrogen or methyl;

- Diamines and polyamines of formula (II):

   R-(NH-L)ₙ-NH₂ (II)

   wherein:
   -R has the same meaning as in (I) above,
   -L represents a linear or branched hydrocarbon radical with 1 to 6 carbon atoms, for instance L is -(CH₂)ₘ- with m = 1, 2 or 3 and,
   -n is an integer greater than or equal to 1, in particular n is an integer from 1 to 6;
- Alkyl amido amines of formula (III): 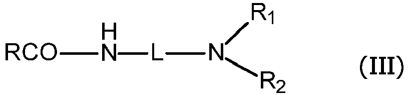 wherein R, R₁, R₂ and L have the same meaning as in (I) and (II), above;
- Amidopolyamines of formula (IV) and imidazolines:

   RCO-(NH-L)ₚ-NH₂ (IV)

   wherein R and L have the same meaning as in (I) and (II) above, and p is an integer greater than or equal to 1, in particular p is an integer from 1 to 10.

Advantageously, the amine additive is selected from amines, diamines, polyamines, alkyl amido amines and amidopolyamines including a fatty chain. According to a specific embodiment, the amine additive is an amidopolyamine including a fatty chain of formula:

RCO-[NH-L]ₚ-NH₂ (IV)

where:
- p is an integer greater than or equal to 1, in particular p is an integer from 1 to 10,
- L is a linear or branched hydrocarbon radical with 1 to 6 carbon atoms, for instance L is -(CH₂)ₘ- with m = 1, 2 or 3,
- R is a saturated or unsaturated, substituted or unsubstituted, optionally branched hydrocarbon radical with 8 to 24 carbon atoms.

In particular, the amine additive of the composition is a mixture of amidopolyamines of formula (IV) in which p is an integer from 1 to 10, L is -(CH₂)₂-, and R are the hydrocarbon chains of the fatty acids of tall oil.

Wetfix BE (CAS 68910-93-0) marketed by AkzoNobel is an example of such an amine additive.

According to the invention, the bituminous composition in which the hydroxide is used may contain any conventional additive(s) used by the person skilled in the art in bituminous compositions, in particular an olefinic polymer adjuvant.

Advantageously, the olefinic polymer adjuvant is functionalized by at least one epoxy group. Such kind of olefinic polymer adjuvant may promote to a thermal crosslinking of the crosslinked elastomer polymer, but may be included whatever the chosen crosslinking route.

The olefinic polymer adjuvant functionalized by at least one epoxy group is preferably chosen from the group consisting of (a) ethylene/glycidyl (meth)acrylate copolymers; (b) ethylene/monomer A/monomer C terpolymers and (c) the mixtures of these copolymers.
(a) The ethylene/glycidyl (meth)acrylate copolymers are advantageously chosen from copolymers, preferably random, of ethylene and of a monomer chosen from glycidyl acrylate and glycidyl methacrylate, comprising from 50% to 99.7% by weight, preferably from 60% to 95% by weight, more preferentially from 60% to 90% by weight, of ethylene.
(b) The terpolymers are advantageously chosen from terpolymers, preferably random, of ethylene, of a monomer A and of a monomer C.

The monomer A is chosen from vinyl acetate and C1 to C6 alkyl acrylates or methacrylates, preferably chosen from C1 to C6, more preferentially still C1-C3, alkyl acrylates or methacrylates.

Advantageously, the monomer A is chosen from ethyl acrylate and ethyl methacrylate.

More advantageously still, the monomer A is ethyl acrylate.

The monomer C is chosen from glycidyl acrylate and glycidyl methacrylate. Advantageously, the monomer C is glycidyl methacrylate.

The ethylene/monomer A/monomer C terpolymers comprise from 0.5% to 40% by weight, preferably from 5% to 35% by weight and more preferentially from 10% to 30% by weight of motifs resulting from the monomer A and from 0.5% to 15% by weight and preferably from 2.5% to 15% by weight of motifs resulting from the monomer C, the remainder being formed of motifs resulting from ethylene.

(c) The olefinic polymer adjuvant functionalized by at least one epoxy group can consist of a mixture of two or more copolymers chosen from the categories (a) and (b).

The olefinic polymer adjuvant functionalized by at least one epoxy group is preferably chosen from the ethylene/monomer A/monomer C terpolymers (b) described above and from the mixtures (c) comprising them.

The olefinic polymer adjuvant functionalized by at least one epoxy group is advantageously chosen from the ethylene/monomer A/monomer C terpolymers (b) described above and from the mixtures (c) in which the terpolymers (b) represent at least 50% by weight, with respect to the total weight of the mixture, preferentially at least 75% by weight, even better still at least 90% by weight.

Advantageously, the olefinic polymer adjuvant functionalized by at least one epoxy group is chosen from random terpolymers of ethylene, of a monomer A chosen from Ci to C6 alkyl acrylates or methacrylates and of a monomer C chosen from glycidyl acrylate and glycidyl methacrylate, comprising from 0.5% to 40% by weight, preferably from 5% to 35% by weight, more preferentially from 10% to 30% by weight, of motifs resulting from the monomer A and from 0.5% to 15% by weight, preferably from 2.5% to 15% by weight, of motifs resulting from the monomer C, the remainder being formed of motifs resulting from ethylene.

Preferably, the number-average molecular weight (Mn) of the olefinic polymer adjuvant functionalized by at least one epoxy group, determined by gel permeation chromatography with a polystyrene standard, ranges from 5000 to 50 000 g/mol, more preferentially from 10 000 to 40 000 g/mol and more preferentially still from 25 000 to 40 000 g/mol.

Preferably, the weight-average molecular weight (Mw) of the olefinic polymer adjuvant functionalized by at least one epoxy group, determined by gel permeation chromatography with a polystyrene standard, ranges from 10 000 to 250 000 g/mol, more preferentially from 50 000 to 200 000 g/mol and more preferentially still from 10 000 to 150 000 g/mol.

Advantageously, the number-average molecular weight (Mn) of the olefinic polymer adjuvant functionalized by at least one epoxy group, determined by triple detection gel permeation chromatography, is greater than or equal to 20 000 g/mol, preferably greater than or equal to 30 000 g/mol, more preferentially still greater than or equal to 40 000 g/mol and advantageously greater than or equal to 45 000 g/mol.

More advantageously, the number-average molecular weight (Mn) of the olefinic polymer adjuvant functionalized by at least one epoxy group, determined by triple detection gel permeation chromatography, ranges from 20 000 to 200 000 g/mol, preferably from 30 000 to 180 000 g/mol, more preferentially still from 40 000 to 150 000 g/mol and advantageously from 45 000 to 120 000 g/mol.

Advantageously, the weight-average molecular weight (Mw) of the olefinic polymer adjuvant functionalized by at least one epoxy group, determined by triple detection gel permeation chromatography, is greater than or equal to 60 000 g/mol, preferably greater than or equal to 65 000 g/mol, more preferentially still greater than or equal to 70 000 g/mol and advantageously greater than or equal to 75 000 g/mol.

More advantageously, the weight-average molecular weight (Mw) of the olefinic polymer adjuvant functionalized by at least one epoxy group, determined by triple detection gel permeation chromatography, ranges from 60 000 to 200 000 g/mol, preferably from 65 000 to 190 000 g g/mol, more preferentially still from 70 000 to 180 000 g/mol and advantageously from 75 000 to 170 000 g/mol.

Advantageously, the polydispersity index of the olefinic polymer adjuvant functionalized by at least one glycidyl group, determined by triple detection gel permeation chromatography, is less than or equal to 3, preferably less than or equal to 2.5, more preferentially less than or equal to 2.0 and advantageously less than or equal to 1.8.

More advantageously, the polydispersity index of the olefinic polymer adjuvant functionalized by at least one glycidyl group, determined by triple detection gel permeation chromatography, ranges from 0.5 to 3.0, preferably from 0.8 to 2.5, more preferentially from 1.0 to 2.0 and advantageously from 1.2 to 1.8.

The term "monomer unit" is understood to mean, within the meaning of the invention, the largest constituent unit generated by the (co)polymerization of a single molecule of said monomer.

Advantageously, the olefinic polymer adjuvant functionalized by at least one glycidyl group comprises, on average, at least 500 ethylene units per macromolecule, preferably at least 800 ethylene units, more preferentially at least 1000 ethylene units, more preferentially still at least 1200 ethylene units and advantageously at least 1250 ethylene units.

More advantageously, the olefinic polymer adjuvant functionalized by at least one glycidyl group comprises, on average, from 500 to 10 000 ethylene units per macromolecule, preferably from 800 to 5000 ethylene units, more preferentially from 1000 to 4000 ethylene units, more preferentially still from 1200 to 3500 ethylene units and advantageously from 1250 to 3400 ethylene units.

Advantageously, the olefinic polymer adjuvant functionalized by at least one glycidyl group comprises, on average, at least 30 alkyl (meth)acrylate units per macromolecule, preferably at least 50 alkyl (meth)acrylate units, more preferentially at least 70 alkyl (meth)acrylate units, more preferentially still at least 90 alkyl (meth)acrylate units and advantageously at least 95 alkyl (meth)acrylate units.

More advantageously, the olefinic polymer adjuvant functionalized by at least one glycidyl group comprises, on average, from 30 to 500 alkyl (meth)acrylate units per macromolecule, preferably from 50 to 400 alkyl (meth)acrylate units, more preferentially from 70 to 300 alkyl (meth)acrylate units, more preferentially still from 90 to 250 alkyl (meth)acrylate units and advantageously from 95 to 200 alkyl (meth)acrylate units.

Advantageously, the olefinic polymer adjuvant functionalized by at least one glycidyl group comprises, on average, at least 15 glycidyl (meth)acrylate units per macromolecule, preferably at least 20 glycidyl (meth)acrylate units.

More advantageously, the olefinic polymer adjuvant functionalized by at least one glycidyl group comprises, on average, from 15 to 200 glycidyl (meth)acrylate units per macromolecule, preferably from 15 to 150 glycidyl (meth)acrylate units, more preferentially from 20 to 125 glycidyl (meth)acrylate units, more preferentially still from 20 to 100 glycidyl (meth)acrylate units and advantageously from 20 to 90 glycidyl (meth)acrylate units.

Preferably, the average weight of the ethylene units present in one mole of olefinic polymer adjuvant functionalized by at least one glycidyl group is greater than or equal to 15 000 g, more preferentially greater than or equal to 20 000 g, more preferentially still greater than or equal to 25 000 g, advantageously greater than or equal to 30 000 g and more advantageously greater than or equal to 35 000 g. More preferentially, the average weight of the ethylene units present in one mole of olefinic polymer adjuvant functionalized by at least one glycidyl group ranges from 15 000 to 200 000 g, more preferentially from 20 000 to 150 000 g, more preferentially still from 25 000 to 100 000 g, advantageously from 30 000 to 90 000 g and more advantageously from 35 000 to 88 000 g.

Preferably, the average weight of the alkyl (meth)acrylate units present in one mole of olefinic polymer adjuvant functionalized by at least one glycidyl group is greater than or equal to 3500 g, more preferentially greater than or equal to 5000 g, more preferentially still greater than or equal to 7500 g and advantageously greater than or equal to 9500 g.

More preferentially, the average weight of the alkyl (meth)acrylate units present in one mole of olefinic polymer adjuvant functionalized by at least one glycidyl group ranges from 3500 to 50 000 g, more preferentially from 5000 to 25 000 g, more preferentially still from 7500 to 20 000 g and advantageously from 9500 to 19 000 g. Preferably, the average weight of the glycidyl (meth)acrylate units present in one mole of olefinic polymer adjuvant functionalized by at least one glycidyl group is greater than or equal to 1500 g, more preferentially greater than or equal to 2000 g, more preferentially still greater than or equal to 2500 g, advantageously greater than or equal to 2750 g and more advantageously greater than or equal to 2900 g.

More preferentially, the average weight of the glycidyl (meth)acrylate units present in one mole of olefinic polymer adjuvant functionalized by at least one glycidyl group ranges from 1500 to 20 000 g, more preferentially from 2000 to 17 500 g, more preferentially still from 2500 to 15 000 g, advantageously from 2750 to 12 500 g and more advantageously from 2900 to 12 000 g.

The content of olefinic polymer adjuvant functionalized by at least one epoxy group in the bitumen/polymer composition according to the invention is preferably from 0.05% to 2.5% by weight, with respect to the total weight of the composition, more preferentially from 0.15% to 2% by weight, more preferentially still from 0.2% to 1% by weight, more preferentially still from 0.4% to 1% by weight, more preferentially still from 0.4% to 0.8% by weight.

### Preparation of a bituminous composition in which the hydroxide is used

According to the invention, the bituminous composition can be prepared, by any conventional means, known in the art, in particular by direct incorporation of the hydroxide in the bituminous composition, as described in WO 2018/206489 or by the preparation of a master batch composition comprising the hydroxide in a hydrocarbonated component as described in WO 2021/116296. In that last case, the hydrocarbonated component is, in particular, chosen among oils and bitumen, in particular selected among soft bitumen, fluxed bitumen and a cut-back bitumen. Advantageously, the hydroxide is introduced in an intermediary bitumen composition, which already comprised the crosslinked elastomer, so after the crosslinking of the elastomer. The crosslinking of the polymer is previously obtained by conventional means, for instance as described in US 2012/20700 or US 2021/047514, by the use of a thermal treatment or by the use of a crosslinking agent, in particular a sulphured crosslinking agent, as previously described.

In a preferred embodiment, the different constituents are added subsequently in the bituminous composition.

Preferably, when an olefinic polymer is present in the bituminous composition, it is incorporated into the intermediary bituminous composition, before the hydroxide. Preferably, when an amine additive is present in the bituminous composition, it is incorporated, after the hydroxide.

The different components of the bituminous composition may be introduced, under mixing at a temperature in the range of 90 to 230°C, preferably of 120° to 200°C. The mixture of the different constituents of the bituminous composition is conventionally obtained under stirring, for instance during a period of time of at least five minutes, preferably from 5 minutes to 10 hours, more preferably from 10 minutes to 5 hours, more preferably from 20 minutes to 4 hours.

According to a preferred embodiment, the manufacture of the bitumen composition includes the preparation of an intermediary bitumen composition (crosslinked elastomer/bitumen, in particular sulphur-crosslinking or heat-crosslinked elastomer/bitumen), in which the hydroxide is introduced. This intermediary bitumen composition may be obtained, for example, by the following successive stages:
i) the bitumen, the crosslinkable elastomer and optionally a crosslinking agent or one or several other additives, are introduced into a reactor,
ii) the obtained mixture is stirred until a homogeneous mixture is obtained and heated at a temperature ranging from 100° C to 200° C, preferably from 150° C to 200° C, preferentially from 160° C to 200° C, more preferably from 160° C to 195° C, more preferably still from 160° C to 180° C.

The mixing of stage ii) is preferably carried out for a period of time of at least 10 minutes, preferably from 1 hour to 24 hours, more preferentially from 1 hour to 10 hours.

Preferably, the stirring at high shear, and notably the stirring carried out by passing through a mill at high shear, makes it possible to facilitate the good dispersion and the good distribution of the crosslinkable elastomer and of the optional olefinic polymer adjuvant.

Advantageously, the hydroxide is introduced in this intermediary bitumen composition (crosslinked elastomer/bitumen), which already comprised the crosslinked elastomer, under mixing at a temperature in the range of 90 to 230°C, preferably of 120° to 200°C and the mixing is maintained after its introduction. The mixing is conventionally carried out under stirring, advantageously under agitation in the range from 100 to 1000 rpm, preferably in the range from 200 to 800 rpm, for instance during a period of time of at least five minutes, preferably from 5 minutes to 10 hours, more preferably from 10 minutes to 5 hours, more preferably from 1 hour to 4 hours

Most of the time, if needed, the intermediary bituminous composition is heated at a temperature where it is in a liquid state, for favouring the regular incorporation of the hydroxide XOH. For instance, a temperature just enough to have the intermediary bituminous composition melting may be used, when the hydroxide is introduced as a powder. When the hydroxide is introduced as a solution in a solvent, for instance, as an aqueous solution, the heating will preferentially be adapted for allowing the spontaneous evaporation of the solvent, simultaneously with its incorporation.

Advantageously, within the composition, the hydroxide XOH forms particles with the maximal size of the particles being equal to 100 µm or less, and preferentially with the maximal size of the particles being equal to 60 µm or less. In particular, the average maximal size of the introduced hydroxide particles is within the range from 10 to 100 µm, preferably within the range from 20 to 60 µm. The average maximal size of the particles corresponds to the arithmetic average of the maximal sizes of several particles, preferably of 20 particles. The maximal sizes can be measured by microscopy. This size may be obtained, in particular, by using the master batch method as described in WO 2021/116296 or by direct incorporation of the hydroxide in the bituminous composition, as described in WO 2018/206489. The obtained size of the hydroxide within the composition may be modulated, by the person skilled in the art, by the choice of the conditions of mixing and/or incorporation of the hydroxide XOH within the bituminous composition.

The manufacture of the composition may also include a final maturing stage, carried out by maintaining the composition in an oven at a temperature ranging from 100° C to 200° C, more preferentially ranging from 150° C to 200° C, more preferentially still ranging from 160° C to 200° C, advantageously from 160° C to 195° C and more advantageously still from 160° C to 180° C, preferably for a period of time of at least 30 min, more preferentially from 1 hour to 48 hours, more preferentially still from 12 hour to 30 hours, before it is stored or used.

### Use of the bituminous compositions

The bituminous compositions in which the hydroxide is used can be used in the fields of road applications or in the fields of industrial applications. Whatever the field of application, the bituminous composition is used as a bituminous binder and is shaped and/or associated with other components under heat. Conventionally, the heating temperature is in the range 80 to 240°C, more preferably in the range of 90 to 230°C.

In road applications, the bituminous composition is, in particular, used for the manufacture of hot bituminous mixes, asphalts or surface coatings. For instance, the bituminous composition may be included in bituminous mixes as materials for the construction and the maintenance of road foundations and their surfacing, and for all road works. Thus, the bituminous composition can be combined with aggregates and/or inorganic and/or synthetic fillers under heat and applying the obtained material to form a part of the road.

The bituminous composition can be employed to prepare a combination with aggregates, advantageously with road aggregates, in particular to form a bituminous mix.

A bituminous mix is understood to mean a mixture of a bituminous composition with aggregates and optionally inorganic and/or synthetic fillers. In general, the aggregates and the inorganic and/or synthetic fillers, when they are present, represent from 90 to 96 %, preferably from 94.5 to 95 % by weight of the bituminous mix and the bituminous composition from 4 to 10 %, preferably from 5 to 5.5 % by weight of the bituminous mix.

The aggregates are inorganic and/or synthetic aggregates, in particular, recycled milled products, with dimensions of greater than 2 mm, preferably of between 2 mm and 20 mm. Inorganic and/or synthetic fillers are preferably chosen from fines, sand, stone chips and recycled milled products.

As regards the road applications, the bituminous composition is also targeted at asphalts as materials for constructing and covering sidewalks. Asphalt is understood to mean a mixture of a bituminous composition with inorganic and/or synthetic fillers. Such an asphalt comprises a bituminous composition and inorganic fillers, such as fines, sand or stone chips, and/or synthetic fillers. The inorganic fillers are composed of fines (particles with dimensions of less than 0.063 mm), of sand (particles with dimensions of between 0.063 mm and 2 mm) and optionally of stone chips (particles with dimensions of greater than 2 mm, preferably of between 2 mm and 4 mm).

The asphalts exhibit 100% compactness and are mainly used to construct and cover sidewalks, whereas the mixes have a compactness of less than 100% and are used to construct roads. Unlike the mixes, the asphalts are not compacted with a roller when being put in place.

In industrial applications, the bituminous composition is, in particular, used for the manufacture of internal or external coatings, advantageously for preparing a leaktight coating, a membrane or a seal coat.

As regards the industrial applications of the bituminous compositions, mention may be made of the preparation of leaktight membranes, of noise-reduction membranes, of insulting membranes, of surface coatings, of carpet tiles or of seal coats.

### Examples

### Studied properties

The needle penetrability was measured at 25°C according to the standard DIN EN 1426 (Needlepenetration 25°C in the **Table 1**).

The ring and ball softening temperature was measured according to the standard DIN EN 1427 (Softening Point (R+B) in the **Table 1**).

The elastic recovery was measured at 25°C according to DIN EN 13398.

The deformation energy was measured at 10°C (20-40 cm) according to DIN EN 13589 standard.

The phase angle (δ) and the temperature (T) corresponding to a complex shear modulus (G*) of 15kPa were measured with a Dynamic Shear Rheometer (DSR) according to DIN EN 14770 standard.

The storage stability was evaluated according to DIN EN 13399: the bitumen was stored in tubes at 180°C for 3 days and the ring and ball softening temperature and the needle penetrability were measured, at the top of the tube and at the bottom. If they match, the bitumen is storage-stable.

RTFOT and RTFOT+PAV at 100°C: The resistance of the bituminous compositions against hardening and ageing was respectively tested according to the standards DIN EN 12607-1 and DIN 12607-1 + 14769.

### Materials

The sodium hydroxide (NaOH) was anhydrous and its purity is above 99% and provided in the form of pellets (CARL ROTH GMBH & Co. KG, Article No 9356.1). An aqueous solution containing 20% by weight of this NaOH was prepared with distilled water.

The bitumen AZALT 30/45 had a Needle penetration measured at 25°C according the standard DIN EN 1426 of 38 mm/10 and a softening point (R+B) measured according to the standard DIN EN 1427 of 56.2 °C.

The crosslinked elastomer was obtained from the crosslinkable elastomer marketed by Dynasol under reference Solprene^{®} 1205, which is a linear random-block styrenebutadiene copolymer with a total content of 25% by weight of styrene, 17.5% by weight are present as a polystyrene block. The content of vinyl groups is 10 % based on the total moles of copolymer. The copolymer has a weight molecular weight (Mw), determined by triple detection gel permeation chromatography, of 90,000 g/mol.

### Examples

### a) Preparation of the bituminous compositions

An intermediary elastomer-modified bitumen AZALT 30/45 was prepared as follows:
- Addition to AZALT 30/45 previously heated at 180°C, of Dynasol 1205 (3% by weight of the intermediary elastomer-modified AZALT 30-45), mixing at 190°C with a high shear mill. The mixing at 190°C is maintained during 2h.
- Addition of sulphur (0.05 % by weight of the intermediary elastomer-modified AZALT 30-45), under mixing at 180°C with a dissolver plate. The mixture at 180°C is maintained during 2 hours.

The crosslinking of the elastomer occurred under these conditions. This intermediary elastomer-modified bitumen AZALT 30/45 including 3% of crosslinked elastomer is called STYRELF 25/55-55. This STYRELF 25/55-55 was diluted using AZALT 30/45 bitumen without any elastomer, in order to achieve different elastomer contents starting from 3% to 1.8% by weight. Afterwards, 0.49% (by weight of the total weight of the final obtained bituminous composition) caustic soda (as 20% aqueous solution) was added to these intermediary elastomer-modified bitumen compositions, while stirring at 300 rpm at 180 °C during 3 hours, with a dissolver blade. The final bituminous composition had been conditioned at 180 °C during 24 hours in a drying oven before starting the evaluation of their properties.

### b) Evaluated properties

The obtained results are presented in **Table 1** hereafter, in comparison with those obtained for STYRELF 25/55-55 (3% elastomer-modified bitumen AZALT 30/45, but without hydroxide).

**Table 1**

| | | | | *Without NaOH Styrelf 25*/*55-55* | *Examples (Ex.) with NaOH* | | | | |
|---|---|---|---|---|---|---|---|---|---|
| Elastomer content in the intermediary elastomer-modified AZALT 30-45 | | | | *3.0%* | 3.0 % | 2.4 % | 2.2 % | 2.0% | 1.8% |
| **Parameter** | **Norm** | **Unit** | | | | | | | |
| Softening Point (R+B) | DIN EN 1427 | °C | ≥55 | *57.8* | 69.0 | 64.2 | 63.2 | 63.0 | 59.8 |
| Needlepenetration at 25 °C | DIN EN 1426 | mm/1 0 | 25-55 | *47* | 45 | 47 | 48 | 48 | 49 |
| Elastic Recovery at 25 °C | DIN EN 13398 | % | ≥50 | *78* | 84 | 80 | 77 | 76 | 73 |
| Deformation Energy at 10 °C (20-40 cm) | DIN EN 13589 | J/cm² | ≥2 | *3.4* | 3.9 | 3.1 | 2.9 | 2.8 | 2.0 |

| **Storage Stability 180 °C** | DIN EN 13399 | | | | | | | | |
|---|---|---|---|---|---|---|---|---|---|
| - Softening Point R+B (Top) | DIN EN 1427 | °C | | *59.0* | 67.6 | 70.2 | 62.6 | 62.0 | 59.6 |
| - Softening Point R+B (Bottom) | DIN EN 1427 | °C | | *58.8* | 68.0 | 71.2 | 62.6 | 62.2 | 59.8 |
| - Softening Point difference | DIN EN 1427 | °C | ≤5 | *0.2* | 0.4 | 1.0 | 0.0 | 0.2 | 0.0 |
| - Needlepenetration at 25 °C (Top) | DIN EN 1426 | mm/1 0 | | *47* | 48 | 44 | 47 | 47 | 50 |
| - Needlepenetration at 25 °C (Bottom) | DIN EN 1426 | mm/1 0 | | *46* | 46 | 43 | 47 | 46 | 49 |
| - Needlepenetration difference | DIN EN 1426 | mm/1 0 | | *1* | 2 | 1 | 0 | 1 | 1 |

| **DSR** | AL DSR | | | | | | | | |
|---|---|---|---|---|---|---|---|---|---|
| - T (G*=15 kPa) | AL DSR | °C | 48-62 | *53.5* | 56.4 | 55.7 | 54.9 | 55.3 | 53.7 |
| - δ (G*=15 kPa) | AL DSR | ° | ≤75 | *69.9* | 59.0 | 62.6 | 63.8 | 63.9 | 65.7 |

| **Resistance to hardening RTFOT** | DIN EN 12607-1 | | | | | | | | |
|---|---|---|---|---|---|---|---|---|---|
| - Change in Softening Point (R+B) | DIN EN 1427 | °C | | *7.8* | 4.4 | 4.6 | 4.6 | 4.6 | 5.0 |
| - Remaining Needlepenetration at 25 °C | DIN EN 1426 | % | | *74* | 91 | 85 | 90 | 81 | 82 |
| - Elastic Recovery at 25 °C | DIN EN 13398 | % | | *76* | 87 | 82 | 80 | 77 | 71 |
| - Change of T (G*= 15 kPa) | AL DSR | °C | | *5.8* | 0.7 | 1.5 | 1.1 | 1.7 | 3.1 |

| **Resistance to hardening RTFOT + PAV 100 °C** | DIN EN 12607-1+14769 | | | | | | | | |
|---|---|---|---|---|---|---|---|---|---|
| - Change in Softening Point (R+B) | DIN EN 1427 | °C | | *17.4* | 11.8 | 12.2 | 10.8 | 12.4 | 12.8 |
| - Remaining Needlepenetration at 25 °C | DIN EN 1426 | % | | *38* | 62 | 66 | 50 | 54 | 57 |
| - Change of T (G*=15 kPa) | AL DSR | °C | | *15.0* | 8.3 | 7.0 | 6.8 | 7.1 | 10.4 |

These results show that the use of the hydroxide according to the invention has a positive impact on the elastic properties of the bituminous composition. It is known that a bitumen modified by the presence of a crosslinked elastomer improves the elastic properties of the obtained bituminous composition. The obtained results with the incorporation of an alkaline hydroxide, like NaOH, show that the use of such an alkaline hydroxide improves again the elastic properties, and so the elastic behaviour of the bituminous composition:
- When the compositions comprising the same content of crosslinked elastomer (without hydroxide addition and before the hydroxide addition), the elastic properties were improved. The elastic recovery at 25°C increased from 78 % to 84%, the deformation energy at 10°C increased from 3.4 to 3.9, the phase angle (δ) decreased from 69.9 ° to 59.0 ° and the temperature (T) increases from 53.5 to 56.4. These differences are significant. In particular, the difference of the elastic recovery at 25°C and of the deformation energy at 10°C are higher than the repeatability factor (r), as defined in the standard, which is the more relevant factor in the present case, as the measures had been carried out in the same laboratory ;
- When the content of crosslinked elastomer is reduced, some elastic properties were still improved, when hydroxide was included in comparison with the reference STYRELF 25/55-55. **Figure 1** shows the elastic recovery at 25°C and deformation energy at 10°C, at the different crosslinked elastomer contents. With a content of 2.4% by weight of crosslinked elastomer (in the modified bitumen composition, before addition of hydroxide), the elastic performances are within the repeatability of the measurement results obtained with a content of 3% by weight of crosslinked elastomer in the modified bitumen composition. Consequently, the crosslinked elastomer quantity can be reduced by 20% using additional hydroxide, while the same elastic behaviour according to these two measurements is maintained.
When examining the rheological results showed on **Figure 2**, even with 1.8% by weight of crosslinked elastomer in the modified bitumen composition before addition of hydroxide, the elastic behaviour (smaller phase angle δ) is better than with the 3.0% by weight of crosslinked elastomer, while all these compositions have a very similar stiffness.

## Claims

1. **-** Use of a hydroxide XOH with X = Na or K, in a bituminous composition comprising a bitumen modified by a crosslinked elastomer which is a crosslinked vinyl aromatic hydrocarbon and conjugated diene copolymer, having a vinyl aromatic hydrocarbon content representing less than 30% by weight of the weight of the crosslinked elastomer, for improving the effect of the crosslinked elastomer on the elastic properties of the bituminous composition.

2. **-** Use according to claim 1, wherein the introduced quantity of hydroxide XOH in the bituminous composition represents at most 3 % by weight, preferably from 0.01 to 2 % by weight, and more preferentially from 0.05 to 1 % by weight, and more preferentially from 0.1 to 0.7 % by weight, of the weight of said bituminous composition.

3. **-** Use according to claim 1 or 2, wherein the hydroxide XOH is NaOH.

4. **-** Use according to anyone of claims 1 to 3, wherein the elastic properties of the bituminous composition for which the effect is improved are at least the elastic recovery at 25°C, measured according to DIN EN 13398 standard, preferably the elastic properties of the bituminous composition for which the effect is improved are at least the elastic recovery at 25°C, measured according to DIN EN 13398 standard and the deformation energy at 10°C measured according to DIN EN 13589 standard, and more preferentially the elastic properties of the bituminous composition for which the effect is improved are the elastic recovery at 25°C, measured according to DIN EN 13398 standard, the deformation energy at 10°C measured according to DIN EN 13589 standard and the phase angle and/or the temperature corresponding to a complex shear modulus of 15kPa measured with a Dynamic Shear Rheometer according to DIN EN 14770 standard.

5. **-** Use according to anyone of claims 1 to 4, wherein the crosslinked elastomer is a styrene and butadiene copolymer, and preferentially a block copolymer or a random-block copolymer.

6. **-** Use according to claim 5, wherein the crosslinked elastomer is selected among copolymers **SB**, which are formed either by a block based on monoviny laromatic hydrocarbon monomers, typically styrene, and a butadiene-based block, forming a copolymer of formula **S-B**, or by a monovinyl aromatic hydrocarbon/butadiene, typically styrene and butadiene, random-block copolymer including at least a block based on monovinyl aromatic hydrocarbon monomers, typically styrene, followed by at least a butadiene-based block, but also one or several part(s) corresponding to a random copolymer monovinyl aromatic hydrocarbon/butadiene, typically styrene/butadiene, in their crosslinked form ; preferentially, in these copolymers **SB**, the vinyl group content of the butadiene units is in the range from 5% to 50% by weight, based on the total weight of condensed polybutadiene sequence(s), preferably in the range from 10% to 40% by weight.

7. **-** Use according to claim 5 or 6, wherein the crosslinking of the crosslinked elastomer is achieved within the bituminous composition, by thermal crosslinking or by crosslinking using a sulphured crosslinking agent.

8. **-** Use according to anyone of claims 1 to 7, wherein the crosslinked elastomer represents from 0.5 to 20 % by weight, more preferentially from 1 to 15 % by weight, more preferentially from 2 to 10 % by weight, and more preferentially from 2 to 5 % by weight, of the total weight of said bituminous composition.

9. **-** Use according to anyone of claims 1 to 8, wherein the bituminous composition also includes an olefinic polymer, which, in particular, represents from 0.05% to 2.5% by weight, preferentially from 0.15% to 2% by weight, more preferentially still from 0.4% to 1% by weight, more preferentially still from 0.4% to 0.8% by weight, of the total weight of said bituminous composition said olefinic polymer being preferentially selected from the group consisting of (a) ethylene/glycidyl (meth)acrylate copolymers; (b) ethylene/monomer A/monomer C terpolymers and (c) the mixtures of these copolymers ; in particular, the olefinic polymer is chosen from the groups (a), (b) and (c) consisting of:
(a) the copolymers of ethylene and glycidyl (meth) acrylate chosen from, preferably random copolymers, of ethylene and of a monomer selected from glycidyl acrylate and glycidyl methacrylate, comprising from 50 % to 99.7 % by weight, preferably from 60 % to 95 % by weight, more preferably from 60 % to 90 % by weight of ethylene;
(b) the terpolymers, preferably random terpolymers, of ethylene, of a monomer A and of a monomer C chosen from random and block terpolymers; the monomer A being, preferentially, selected from vinyl acetate, (C₁-C₆)alkylacrylates and methacrylates and the monomer C being selected from glycidylacrylate and glycidylmethacrylate; in particular, the terpolymers ethylene/monomer A/monomer C comprise from 0.5 % to 40 % by weight, preferably from 5 to 35 % by weight, more preferably from 10 % to 30 % by weight of units resulting from monomer A and from 2.5 % to 15 % by weight of units resulting from monomer C, the rest being formed by units derived from the ethylene ;
(c) a mixture of two or more copolymers chosen from the categories (a) and (b).

10. - Use according to anyone of claims 1 to 9, wherein the bituminous composition comprises also an adhesive promoter selected from amines, diamines, polyamines, alkyl amido amines, amidopolyamines and imidazolines, which preferably represents at most 3 % by weight, preferably from 0.01 to 2 % by weight, and more preferentially from 0.05 to 1 % by weight, and more preferentially from 0.1 to 0.5 % by weight, of the total weight of said bituminous composition said bituminous composition.

## Patentansprüche

1. Verwendung eines Hydroxids XOH, wobei X Na oder K ist, in einer bitumenhaltigen Zusammensetzung, umfassend ein Bitumen, das mit einem vernetzten Elastomer modifiziert ist, wobei es sich um ein Copolymer von vernetztem vinylaromatischem Kohlenwasserstoff und konjugiertem Dien handelt, mit einem Gehalt an vinylaromatischem Kohlenwasserstoff, der weniger als 30 Gew.-% des Gewichts des vernetzten Elastomers bildet, um die Wirkung des vernetzten Elastomers auf die Elastizitätseigenschaften der bitumenhaltigen Zusammensetzung zu verbessern.

2. Verwendung nach Anspruch 1, wobei die eingebrachte Menge an Hydroxid XOH in der bitumenhaltigen Zusammensetzung höchstens 3 Gew.-%, vorzugsweise 0,01 bis 2 Gew.-% und stärker bevorzugt 0,05 bis 1 Gew.-% und stärker bevorzugt 0,1 bis 0,7 Gew.-% des Gewichts der bitumenhaltigen Zusammensetzung darstellt.

3. Verwendung nach Anspruch 1 oder 2, wobei das Hydroxid XOH NaOH ist.

4. Verwendung nach einem der Ansprüche 1 bis 3, wobei die Elastizitätseigenschaften der bitumenhaltigen Zusammensetzung, in Bezug auf welche die Wirkung verbessert wird, zumindest die Elastische Rückstellung bei 25 °C laut Messung gemäß Standard DIN EN 13398, wobei die Elastizitätseigenschaften der bitumenhaltigen Zusammensetzung, in Bezug auf welche die Wirkung verbessert wird, vorzugsweise zumindest die Elastische Rückstellung bei 25 °C laut Messung gemäß Standard DIN EN 13398 und die Verformungsenergie bei 10 °C laut Messung gemäß Standard DIN EN 13589 sind und stärker bevorzugt die Elastizitätseigenschaften der bitumenhaltigen Zusammensetzung, in Bezug auf welche die Wirkung verbessert wird, die Elastische Rückstellung bei 25 °C laut Messung gemäß Standard DIN EN 13398, die Verformungsenergie bei 10 °C laut Messung gemäß Standard DIN EN 13589 und der Phasenwinkel und/oder die Temperatur entsprechend einem komplexen Schermodul von 15 kPa laut Messung mit einem dynamischen Scherrheometer gemäß Standard DIN EN 14770 sind.

5. Verwendung nach einem der Ansprüche 1 bis 4, wobei das vernetzte Elastomer ein Styrol- und Butadiencopolymer und vorzugsweise ein Blockcopolymer oder ein Random-Blockcopolymer ist.

6. Verwendung nach Anspruch 5, wobei das vernetzte Elastomer aus Copolymeren **SB** ausgewählt ist, die entweder durch einen Block auf der Grundlage von monovinylaromatischen Kohlenwasserstoffmonomeren, in der Regel Styrol, und einem Block auf der Grundlage von Butadien gebildet sind, wobei ein Copolymer der Formel **S-B** gebildet wird, oder durch ein Random-Block-Copolymer von monovinylaromatischem Kohlenwasserstoff/Butadien, in der Regel Styrol und Butadien, einschließlich zumindest eines Blocks auf der Grundlage von monovinylaromatischen Kohlenwasserstoffmonomeren, in der Regel Styrol, gefolgt von zumindest einem Block auf der Grundlage von Butadien, wobei auch ein oder mehrere Teile einem Random-Copolymer von monovinylaromatischem Kohlenwasserstoff/Butadien, in der Regel Styrol/Butadien, in deren vernetzten Form entsprechen; vorzugsweise wobei der Vinylgruppengehalt der Butadieneinheiten in diesen Copolymeren SB in dem Bereich von 5 Gew.-% bis 50 Gew.-% bezogen auf das Gesamtgewicht von einer oder mehreren kondensierten Polybutadiensequenzen liegt, vorzugsweise in dem Bereich von 10 Gew.-% bis 40 Gew.-%.

7. Verwendung nach Anspruch 5 oder 6, wobei die Vernetzung des vernetzten Elastomers durch thermische Vernetzung oder durch Vernetzung unter Verwendung eines geschwefelten Vernetzungsmittels innerhalb der bitumenhaltigen Zusammensetzung erzielt wird.

8. Verwendung nach einem der Ansprüche 1 bis 7, wobei das vernetzte Elastomer 0,5 bis 20 Gew.-%, stärker bevorzugt 1 bis 15 Gew.-%, stärker bevorzugt 2 bis 10 Gew.-% und stärker bevorzugt 2 bis 5 Gew.-% in Bezug auf das Gesamtgewicht der bitumenhaltigen Zusammensetzung darstellt.

9. Verwendung nach einem der Ansprüche 1 bis 8, wobei die bitumenhaltige Zusammensetzung auch ein olefinisches Polymer enthält, das insbesondere 0,05 Gew.-% bis 2,5 Gew.-%, vorzugsweise 0,15 Gew.-% bis 2 Gew.-%, noch stärker bevorzugt 0,4 Gew.-% bis 1 Gew.-%, noch stärker bevorzugt 0,4 Gew.-% bis 0,8 Gew.-% in Bezug auf das Gesamtgewicht der bitumenhaltigen Zusammensetzung darstellt, wobei das olefinische Polymer vorzugsweise aus der Gruppe ausgewählt ist, die aus (a) Eythlen/Glycidyl(meth)acrylatcopolymeren; (b) Ethylen/Monomer-A/Monomer-C-Terpolymeren und (c) den Gemischen dieser Polymere besteht; wobei das olefinische Polymer insbesondere aus den Gruppen (a), (b) und (c) ausgewählt ist, die bestehen aus:
(a) den Copolymeren von Ethylen und Glycidyl(meth)acrylat, ausgewählt aus vorzugsweise Random-Copolymeren von Ethylen und einem Monomer, das aus Glycidylacrylat und Glycidylmethacrylat ausgewählt ist, umfassend zu 50 Gew.-% bis 99,7 Gew.-%, vorzugsweise 60 Gew.-% bis 95 Gew.-%, stärker bevorzugt 60 Gew.-% bis 90 Gew.-%, Ethylen;
(b) den Terpolymeren, vorzugsweise Random-Terpolymeren, von Ethylen eines Monomers A und eines Monomers C, ausgewählt aus Random- und Blockterpolymeren; wobei das Monomer A vorzugsweise aus Vinylacetat, (C₁-C₆)-Alkylacrylaten und Methacrylaten ausgewählt ist und wobei das Monomer C aus Glycidylacrylat und Glycidylmethacrylat ausgewählt ist; insbesondere wobei die Terpolymere Ethylen/Monomer A/Monomer C zu 0,5 Gew.-% bis 40 Gew.-%, vorzugsweise 5 bis 35 Gew.-%, stärker bevorzugt 10 Gew.-% bis 30 Gew.-%, Einheiten umfassen, die aus Monomer A resultieren, und zu 2,5 Gew.-% bis 15 Gew.-% Einheiten umfassen, die aus Monomer C resultieren, wobei der Rest durch Einheiten gebildet ist, die aus dem Ethylen abgeleitet sind;
(c) einem Gemisch von zwei oder mehr Copolymeren, die aus den Kategorien (a) und (b) ausgewählt sind.

10. Verwendung nach einem der Ansprüche 1 bis 9, wobei die bitumenhaltige Zusammensetzung auch einen Haftpromoter umfasst, der aus Aminen, Diaminen, Polyaminen, Alkylamidoaminen, Amidopolyaminen und Imidazolinen ausgewählt ist, der vorzugsweise höchstens 3 Gew.-%, vorzugsweise 0,01 bis 2 Gew.-% und stärker bevorzugt 0,05 bis 1 Gew.-% und stärker bevorzugt 0,1 bis 0,5 Gew.-% in Bezug auf das Gesamtgewicht der bitumenhaltigen Zusammensetzung der bitumenhaltigen Zusammensetzung darstellt.

## Revendications

1. Utilisation d'un hydroxyde XOH où X = Na ou K dans une composition bitumineuse comprenant un bitume modifié par un élastomère réticulé qui est un copolymère de diène conjugué et d'hydrocarbure vinylaromatique réticulé, ayant une teneur en hydrocarbure vinylaromatique représentant moins de 30 % en poids du poids de l'élastomère réticulé, pour améliorer l'effet de l'élastomère réticulé sur les propriétés élastiques de la composition bitumineuse.

2. Utilisation selon la revendication 1, dans laquelle la quantité introduite d'hydroxyde XOH dans la composition bitumineuse représente au plus 3 % en poids, de préférence de 0,01 à 2 % en poids, et plus préférentiellement de 0,05 à 1 % en poids, et plus préférentiellement de 0,1 à 0,7 % en poids, du poids de ladite composition bitumineuse.

3. Utilisation selon la revendication 1 ou 2, dans laquelle l'hydroxyde XOH est NaOH.

4. Utilisation selon l'une quelconque des revendications 1 à 3, dans laquelle les propriétés élastiques de la composition bitumineuse pour lesquelles l'effet est amélioré sont au moins la recouvrance élastique à 25°C mesurée conformément à la norme DIN EN 13398, de préférence les propriétés élastiques de la composition bitumineuse pour lesquelles l'effet est amélioré sont au moins la recouvrance élastique à 25°C mesurée conformément à la norme DIN EN 13398 et l'énergie de déformation à 10°C mesurée conformément à la norme DIN EN 13589, et plus préférentiellement les propriétés élastiques de la composition bitumineuse pour lesquelles l'effet est amélioré sont la recouvrance élastique à 25°C mesurée conformément à la norme DIN EN 13398, l'énergie de déformation à 10°C mesurée conformément à la norme DIN EN 13589, et l'angle de phase et/ou la température correspondant à un module de cisaillement complexe de 15 kPa mesuré avec un rhéomètre à cisaillement dynamique conformément à la norme DIN EN 14770.

5. Utilisation selon l'une quelconque des revendications 1 à 4, dans laquelle l'élastomère réticulé est un copolymère de styrène et de butadiène, et de préférence un copolymère séquencé ou un copolymère séquencé aléatoire.

6. Utilisation selon la revendication 5, dans laquelle l'élastomère réticulé est choisi parmi les copolymères SB, qui sont formés soit par un bloc à base de monomères hydrocarbonés monovinylaromatiques, typiquement de styrène, et un bloc à base de butadiène, en formant un copolymère de formule S-B, soit par un copolymère séquencé aléatoire d'hydrocarbure monovinylaromatique/butadiène, typiquement de styrène et de butadiène, contenant au moins un bloc à base de monomères hydrocarbonés monovinylaromatiques, typiquement de styrène, suivi d'au moins un bloc à base de butadiène, mais aussi d'une ou plusieurs parties correspondant à un copolymère aléatoire d'hydrocarbure monovinylaromatique/butadiène, typiquement de styrène/butadiène, sous leur forme réticulée ; de préférence, dans ces copolymères SB, la teneur en groupe vinyle des motifs butadiène est située dans la plage allant de 5 % à 50 % en poids par rapport au poids total de la ou des séquences de polybutadiène condensé, de préférence dans la plage allant de 10 % à 40 % en poids.

7. Utilisation selon la revendication 5 ou 6, dans laquelle la réticulation de l'élastomère réticulé est atteinte à l'intérieur de la composition bitumineuse par réticulation thermique ou par réticulation utilisant un agent de réticulation soufré.

8. Utilisation selon l'une quelconque des revendications 1 à 7, dans laquelle l'élastomère réticulé représente de 0,5 à 20 % en poids, plus préférentiellement de 1 à 15 % en poids, plus préférentiellement de 2 à 10 % en poids, et plus préférentiellement de 2 à 5 % en poids du poids total de ladite composition bitumineuse.

9. Utilisation selon l'une quelconque des revendications 1 à 8, dans laquelle la composition bitumineuse contient aussi un polymère oléfinique qui en particulier représente de 0,05 % à 2,5 % en poids, de préférence de 0,15 % à 2 % en poids, plus préférentiellement encore de 0,4 % à 1 % en poids, plus préférentiellement encore de 0,4 % à 0,8 % en poids du poids total de ladite composition bitumineuse, ledit polymère oléfinique étant de préférence choisi dans le groupe constitué par (a) les copolymères d'éthylène/(méth)acrylate de glycidyle ; (b) les terpolymères d'éthylène/monomère A/monomère C et (c) les mélanges de ces copolymères ; en particulier le polymère oléfinique est choisi parmi les groupes (a), (b) et (c) consistant en :
(a) les copolymères d'éthylène et de (méth)acrylate de glycidyle choisis parmi les copolymères, de préférence aléatoires, d'éthylène et d'un monomère choisi parmi l'acrylate de glycidyle et le méthacrylate de glycidyle, comprenant de 50 % à 99,7 % en poids, de préférence de 60 % à 95 % en poids, plus préférablement de 60 % à 90 % en poids d'éthylène ;
(b) les terpolymères, de préférence les terpolymères aléatoires, d'éthylène, d'un monomère A et d'un monomère C choisis parmi les terpolymères aléatoires et séquencés ; le monomère A étant de préférence choisi parmi l'acétate de vinyle, les acrylates et méthacrylates d'alkyle en C₁ à C₆, et le monomère C étant choisi parmi l'acrylate de glycidyle et le méthacrylate de glycidyle ; en particulier les terpolymères d'éthylène/monomère A/monomère C comprennent de 0,5 % à 40 % en poids, de préférence de 5 à 35 % en poids, plus préférablement de 10 % à 30 % en poids de motifs résultant du monomère A et de 2,5 % à 15 % en poids de motifs résultants du monomère C, le reste étant formé par des motifs dérivés de l'éthylène ;
(c) un mélange de deux ou plus de deux copolymères choisis parmi les catégories (a) et (b).

10. Utilisation selon l'une quelconque des revendications 1 à 9, dans laquelle la composition bitumineuse comprend aussi un promoteur d'adhérence choisi parmi les amines, les diamines, les polyamines, les alkylamidoamines, les amidopolyamines, et les imidazolines, qui de préférence représente au plus 3 % en poids, de préférence de 0,01 à 2 % en poids, et plus préférentiellement de 0,05 à 1 % en poids, et plus préférentiellement de 0,1 à 0,5 % en poids, du poids total de ladite composition bitumineuse.
